# EUROPEAN PATENT APPLICATION

(11) **EP 4 844 912 A1**
(43) Date of publication of application: **25.11.2026**
(21) Application number: 25750034.8
(22) Date of filing: 19.05.2025
(51) Int. Cl.: H01M 50/209, H01M 50/242, H01M 50/293

(54) **BATTERY PACK AND ELECTRIC APPARATUS**

(30) Priority: 31.03.2025 CN 202520598969 U
(71) Applicant: Eve Energy Co., Ltd., Huizhou, Guangdong 516006 (CN)
(72) Inventor: XU, Dehong, Huizhou, Guangdong 516006 (CN); LI, Fan, Huizhou, Guangdong 516006 (CN)
(74) Representative: Berggren Oy
(86) International application number: PCT/CN2025/095759
(87) International publication number: WO 2026/207984

(57) **Abstract**

A battery pack and an electrical device are provided. The battery pack includes a housing, a plurality of battery modules, and a plurality of first connectors. The battery modules are arranged in the housing at intervals. The battery module has a first end face facing away from a bottom of the housing. The first connector is provided between two adjacent battery modules. The first connector fixes the two adjacent battery modules as a whole. The first connector has a second end face facing away from the bottom of the housing. The second end face is located between the first end face and the bottom of the housing. A distance between the second end face and the first end face is L1, wherein 20 mm≤L130 mm.

## Description

This application claims priority to the Chinese patent application NO. 202520598969.7 filed with the China Patent Office on March 31, 2025. The entire contents of the above application are incorporated by reference into this application.

### Technical Field

The present invention relates to the field of battery technology, and in particular to a battery pack and an electrical device.

### Background

A battery pack typically includes a housing and multiple battery modules within the housing. The battery module includes multiple battery cells arranged in a sequence. Related technologies bond the battery modules together by filling gaps between adjacent battery modules with glue to increase the rigidity of the battery pack.

### Summary

However, during use, when the battery pack vibrates, there is a possibility that the adhesive will tear the welds of the battery cells, causing leakage of the battery cells.

In a possible implementation, a battery pack is provided, including:
a housing;
a plurality of battery modules arranged at intervals in the housing and are all connected to a bottom of the housing, wherein each of the plurality of battery modules has a first end face facing away from the bottom of the housing; and
a plurality of first connectors, wherein a respective one of the plurality of first connectors is sandwiched between two adjacent ones of the plurality of battery modules and is configured to fix the two adjacent battery modules as a whole, each first connector has a second end face facing away from the bottom of the housing, each second end face is located between a respective one of the first end faces and the bottom of the housing, and a distance between the second end face and the first end face is L1, where 20 mm≤L1≤30 mm.

In a possible implementation, an electrical device including the battery pack as described above is provided.

### Advantages of the Application

In some embodiments of the present application, since a weld position of a battery cell is set at a top of the battery module, a distance between the second end face of the first connector and the first end face of the battery module is limited to between 20 mm and 30 mm, so that an unconnected free region is formed at the upper end of the battery module. When the battery pack vibrates, shear stress will be generated at a connection between the battery module and the first connector. Due to the free region, the shear stress transmitted to the top of the battery module will be reduced, thereby preventing the shear stress from causing excessive pulling on the battery cell weld, and ultimately avoiding cracking of the battery cell weld of the battery module which may result in battery cell leakage. This design further enhances the structural stability of the battery module and significantly improves the safety and reliability of the battery pack during use.

### Brief Description of the Drawings

FIG. 1 is a schematic structural diagram of a battery pack provided in a possible implementation of the present application.
FIG. 2 is a partial enlarged diagram of point A shown in FIG. 1.
FIG. 3 is a partial enlarged diagram of point B shown in FIG. 1.
FIG. 4 is a schematic structural diagram of the battery pack (partial structure thereof) shown in FIG. 1.
FIG. 5 is a schematic top view of the battery pack (partial structure thereof) shown in FIG. 4.
FIG. 6 is a partial enlarged diagram of point C shown in FIG. 5.
FIG. 7 is a schematic structural diagram of a battery cell provided in a possible implementation manner of the present application.

Description of reference numerals:
100, battery pack; 10, housing; 20, battery module; 21, first end face; 22, first battery module; 221, third end face; 23, battery cell; 231, case; 232, insulating film; 2321, film segment ; 233, notch; 30, first connector; 31, second end face; 40, structural adhesive; 50, second connector; 51, fourth end face ; 60, elastic connector.

### Detailed Description of the Embodiments

A battery pack typically includes a housing and multiple battery modules within the housing. The battery module includes multiple battery cells arranged in a sequence. Related technologies bond the battery modules together by filling gaps between adjacent battery modules with glue to increase the rigidity of the battery pack. However, during use, when the battery pack vibrates, there is a possibility that the adhesive will tear the welds of the battery cells, causing leakage of the battery cells.

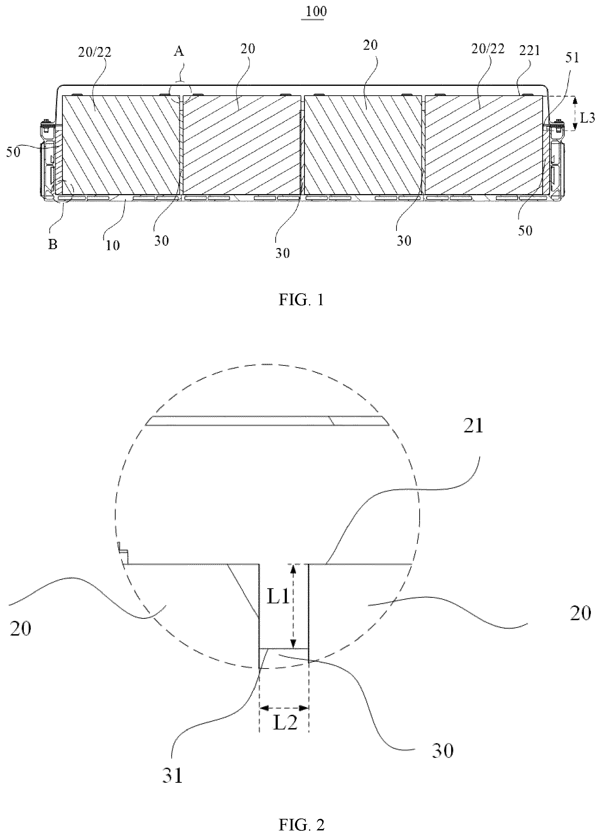

In view of this, the present application proposes a battery pack. FIGS. 1 to 7 are schematic structural diagrams of the battery pack provided by some embodiments of the present application. The battery pack provided by the present application prevents battery pack vibration from causing cracking of battery cell welds and leakage of battery cells. The battery pack will be described in detail below in conjunction with the main figures.

Referring to FIGS. 1 and 2, the battery pack 100 includes a housing 10, a plurality of battery modules 20, and a plurality of first connectors 30. The plurality of battery modules 20 are arranged at intervals in the housing 10 and are all connected to a bottom of the housing 10. The battery module 20 has a first end face 21 facing away from the bottom of the housing 10. The first connector 30 is sandwiched between two adjacent battery modules 20, and is configured to fix the two adjacent battery modules 20 as a whole. The first connector 30 has a second end face 31 facing away from the bottom of the housing 10. The second end face 31 is located between the first end face 21 and the bottom of the housing 10, and a distance between the second end face 31 and the first end face 21 is L1, wherein 20 mm ≤ L1 ≤ 30 mm.

In some embodiments of the present application, since a weld position of the battery cell 23 is set at a top of the battery module 20 , the distance between the second end face 31 of the first connector 30 and the first end face 21 of the battery module 20 is limited to between 20 mm and 30 mm, forming an unconnected free region at an upper end of the battery module 20. When the battery pack 100 vibrates, shear stress will be generated at a connection between the battery module 20 and the first connector 30. Due to the free region, the shear stress transmitted to the top of the battery module 20 will be reduced, thereby preventing the shear stress from causing excessive pulling on the weld of the battery cells 23, and ultimately avoiding cracking of the weld of the battery cell 23 of the battery module 20 which may results in leakage of the battery cell 23. This design further enhances the structural stability of the battery module 20 and significantly improves the safety and reliability of the battery pack 100 during use.

It should be noted that the distance between the second end face 31 and the first end face 21 can be selected as needed. For example, the distance between the second end face 31 and the first end face 21 can be 20 mm, 22 mm, 25 mm, 27 mm, 29 mm, or 30 mm, etc. , which are merely some examples but is not limited herein.

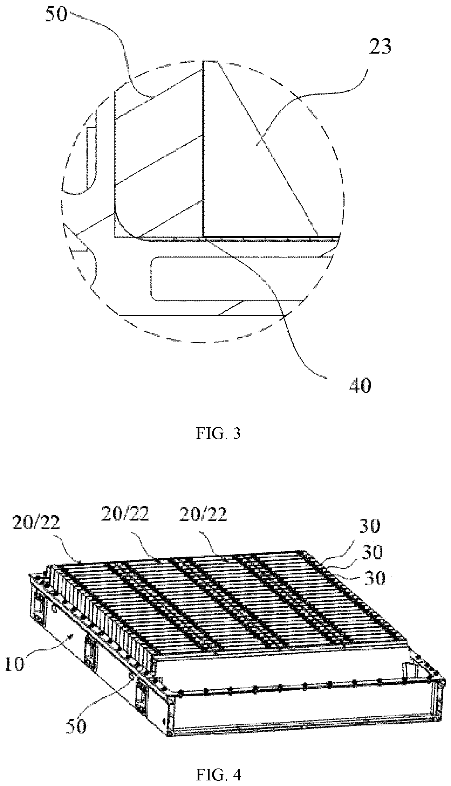

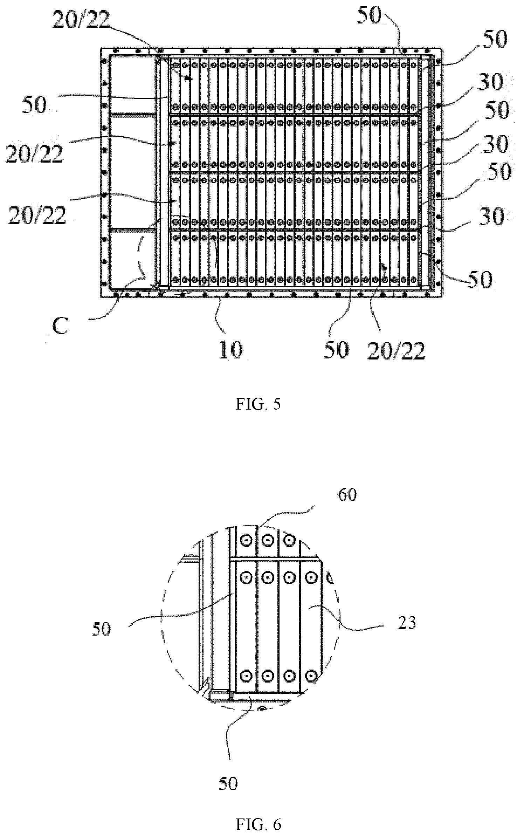

Referring to FIGS. 4 and 5, in some embodiments, the first connector 30 is bonded and fixed to two adjacent battery modules 20. In this way, the first connector 30 bonds the two adjacent battery modules 20 together, which may significantly enhance a connection strength between the battery modules 20, thereby improving the rigidity and structural stability of the entire battery pack 100. Such bonding and fixing using the first connector 30 can greatly simplify an assembly process and reduce production costs.

It should be noted that, in some other embodiments, the first connector 30 may also fix the two adjacent battery modules 20 by clamping, screwing, or welding, which are merely examples but are not limited herein.

In some embodiments, the first connector 30 includes foam glue. As a high-strength adhesive, the foam glue can firmly bond two adjacent battery modules 20 together, forming a stable connection structure. Compared to traditional mechanical connections (such as bolts and rivets), this connection method offers higher connection strength and better durability, which can effectively prevent the battery modules 20 from shifting or loosening under vibration or impact, thereby ensuring the overall stability and safety of the battery pack 100. Using the foam glue as the first connector 30 can greatly simplify the assembly process of the battery pack 100. Compared with traditional connection methods, the foam glue eliminates the need for complex processing steps such as drilling and tapping, as well as additional fasteners and installation tools, thereby reducing production costs and assembly difficulty. Furthermore, the use of foam glue can reduce an overall weight of the battery pack 100, which is beneficial for improving energy efficiency and driving range in applications such as electric vehicles. A foam structure formed by the cured foam glue provides certain thermal and sound insulation properties, which helps to reduce heat and noise generated during operation of the battery pack 100, improving ride comfort and safety in applications such as electric vehicles. The foam glue further has a certain elasticity and can absorb and disperse vibration energy, which reduces stress concentration of the battery pack 100 in a vibration environment. This helps to reduce the risk of vibration-induced cracking in the welds of the battery cell 23, thereby improving the reliability and safety of the battery pack 100.

It should be noted that the type of the first connector 30 can be selected as needed. For example, the first connector 30 can further include structural adhesive 40 or double-sided tape adhesive etc., which are merely examples. However, the present application does not limit the specific type of the first connector 30.

Referring to FIGS. 1 and 5, in some embodiments, the distance between two adjacent battery modules 20 is L2, where 3mm≤L2≤10mm. In this way, when the distance between two adjacent battery modules 20 ranges from 3mm to 10mm, not only air circulation between the battery modules 20 is facilitated, thereby improving heat dissipation performance, but also a volumetric energy density of the battery pack 100 is improved. When the battery pack 100 is subjected to vibration or impact, the distance between two adjacent battery modules 20 ranging from 3mm to 10mm can play a certain buffering role, reducing direct collision and stress concentration between the battery modules 20, thereby improving the overall structural stability of the battery pack 100. The distance between two adjacent battery modules 20 ranges from 3mm to 10mm can further prevent a metal part between the battery modules 20 from short-circuiting due to contact, thereby improving the safety of the battery pack 100.

In addition, the distance between adjacent battery modules 20 directly affects a volume utilization of the battery pack 100. A distance greater than 10 mm between adjacent battery modules 20 increases a volume of the battery pack 100 and reduces the volumetric energy density. A distance less than 3 mm between adjacent battery modules 20 may affect heat dissipation and safety.

It should be noted that the distance between two adjacent battery modules 20ranging from 3 mm and 10 mm is further convenient for filling of the foam glue.

Referring to FIG. 3, in some embodiments, the battery pack 100 further includes a structural adhesive 40, and the battery module 20 is bonded and fixed to the bottom of the housing 10 by the structural adhesive 40. In this way, the structural adhesive 40, as a high-strength adhesive, can firmly bond the battery modules 20 to the bottom of the housing 10, providing stable mechanical support. Compared with traditional metal connectors, the use of structural adhesive 40 can significantly reduce the weight of the battery pack 100, which is beneficial to improving the driving range and energy efficiency of electric vehicles. A bonding process of the structural adhesive 40 is relatively simple, which helps to improve production efficiency. The structural adhesive 40 has a certain elasticity and can absorb and disperse vibration energy to a certain extent, which reduces the stress concentration of the battery pack 100 in a vibration environment and improves anti-shock performance.

Referring to FIG. 5, in some embodiments, the plurality of battery modules 20 include a plurality of first battery modules 22. A sidewall of each of the plurality of first battery modules 22 is arranged opposite to a sidewall of the housing 10. The battery pack 100 further includes a plurality of second connectors 50. The side wall of each first battery module 22 is bonded and fixed to the side wall of the housing 10 via a respective one of the plurality of second connectors 50. Adhesive bonding of the sidewall of each first battery modules 22 to the respective sidewall of the housing 10 via the second connector 50 helps prevent the battery modules 20 from shifting or loosening under vibration or impact, significantly improving the overall rigidity and structural stability of the battery pack 100. The adhesive bonding using the second connectors 50 ensures good contact between the battery modules 20 and the housing 10, allowing heat from the battery modules 20 to be transferred to the housing 10, thereby improving heat dissipation efficiency and extending the battery life. The adhesive bonding via the second connectors 50 significantly simplifies the assembly process, helping to reduce production costs and improve production efficiency. Compared with traditional metal connectors, the second connector 50 can significantly reduce the weight of the battery pack 100, which is beneficial to improving the driving range and energy efficiency of the electric vehicle.

For example, the second connector 50 includes foam glue. As a high-strength adhesive, the foam glue can firmly bond the battery modules 20 to components such as the sidewalls of the housing 10, forming a stable connection. Compared to traditional mechanical connections (such as bolts and rivets), this connection method offers higher connection strength and better durability, which can effectively prevent the battery module 20 from shifting or loosening under vibration or impact, thereby ensuring the overall stability and safety of the battery pack 100. Using the foam glue as the second connector 50 significantly simplifies the assembly process of the battery pack 100. Compared to traditional connection methods, the foam glue eliminates the need for complex processing steps such as drilling and tapping, as well as additional fasteners or installation tools, thereby reducing production costs and assembly difficulty. Furthermore, the use of foam reduces the overall weight of the battery pack 100, which is beneficial for improving energy efficiency and driving range in applications such as electric vehicles. A foam structure formed by the cured foam glue provides thermal and sound insulation, which helps to reduce heat and noise generated by the battery pack 100 during operation, improving ride comfort and safety in applications such as electric vehicles. The foam glue further has a certain degree of elasticity, which can absorb and disperse vibration energy, reducing stress concentration in the battery pack 100 in a vibrating environment. This helps reduce the risk of vibration-induced cracking in the welds of the battery cells 23, thereby improving the reliability and safety of the battery pack 100.

It should be noted that the type of the second connector 50 can be selected as needed. For example, the second connector 50 can further include the structural adhesive 40 or double-sided adhesive, which are merely examples and are not limited herein.

In some embodiments, the first battery module 22 has a third end face 221 facing away from the bottom of the housing 10, and the second connector 50 has a fourth end face 51 facing away from the bottom of the housing 10. The fourth end face 51 is located between the third end face 221 and the bottom of the housing 10. A distance between the fourth end face 51 and the third end face 221 is L3, where 20 mm ≤ L3 ≤ 30 mm. Since a weld seam of the battery cell 23 is located at the top of the battery module 20, the distance between the third end face 221 and the fourth end face 51 is limited to between 20 mm and 30 mm, forming an unconnected free region at the upper end of the battery module 20. When the battery pack 100 vibrates, shear stress is generated at a connection between the battery module 20 and the second connector 50. However, due to the free region, the shear stress transferred to the top of the battery module 20 is reduced, preventing the shear stress from causing excessive pulling on the weld of the battery cells 23, and ultimately avoiding cracking of the weld of the battery cell 23 of the battery module 20 which may results in leakage of the battery cell 23. This design further enhances the structural stability of the battery module 20 and significantly improves the safety and reliability of the battery pack 100 during use.

Referring to FIG. 6, in some embodiments, the battery module 20 includes a plurality of battery cells 23 arranged at intervals in sequence. The battery pack 100 further includes a plurality of elastic connectors 60, with each elastic connectors 60 sandwiched between adjacent battery cells 23. In this way, the elastic connectors 60 act as a buffer and absorb expansion forces between the battery cells 23. During use of the battery module 20, the battery cells 23 expand to a certain extent due to charging and discharging and temperature fluctuations of the battery cells 23. The elastic connectors 60 absorb and distribute this expansion force, preventing direct compression and deformation between the battery cells 23. This reduces expansion forces at the end of the battery module 20's lifespan and helps extend the lifespan of the battery module 20. The p elastic connectors 60 ensures that the spacing between adjacent battery cells 23 remains uniform. Even if the battery cells 23 undergo slight dimensional changes during charging and discharging, the elastic connectors 60 adapt to these changes through their elastic deformation, maintaining a stable spacing between the battery cells 23 and reducing the internal stress caused by uneven expansion of the battery cells 23. The elastic connector 60 not only cushions and absorbs expansion forces but also enhances the structural stability of the battery module 20 through its elastic deformation. When the battery pack 100 is subjected to external shock or vibration, the elastic connector 60 absorbs some of the energy, preventing relative movement and collision between the battery cells 23, thereby maintaining the overall structural stability of the battery module 20. By sandwiching the elastic connector 60 between the battery cells 23, a more compact and stable battery module 20 structure is formed. This structure helps to increase the rigidity of the entire battery pack 100, making the battery pack 100 more robust and durable when encountering external shock or vibration.

In some embodiments, the elastic connector 60 is bonded and fixed to two adjacent battery cells 23. In this way, a firm connection can be formed between the elastic connector 60 and the battery cells 23 by bonding and fixing. This connection is not only stable and reliable, but also can effectively prevent the battery cells 23 from loosening or shifting due to vibration or impact during use, which helps to improve the overall structural stability of the battery module 20. The bonding and fixing method simplifies the assembly process of the battery module 20, reduces production costs, and improves assembly efficiency. During the use of the battery module 20, a size of the battery cell 23 may change slightly due to charging and discharging and temperature changes. Through the bonding and fixing, the elastic connector 60 can adapt to such size changes and maintain close contact with the battery cell 23. This helps to prevent internal stress concentration and relative displacement between the battery cells 23 caused by the size change of the battery cell 23.

It should be noted that the type of elastic connector 60 can be selected as needed. For example, in some embodiments of the present application, the elastic connector 60 includes foam glue. In other embodiments, the elastic connector 60 may further include a rubber pad, a polyurethane foam board, or a silicone pad, which are merely examples and are not limited in the present application.

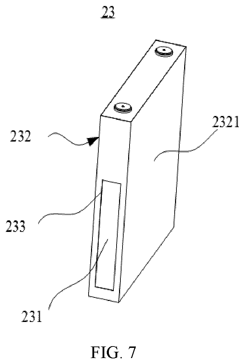

Referring to FIG. 7, in some embodiments, the battery cell 23 includes a case 231 and an insulating film 232 covering the case 231. The insulating film 232 includes a film segment 2321 corresponding to a sidewall of the case 231. By providing a notch 233 in the film segment 2321, the first connector 30 and/or the elastic connector 60 between two adjacent battery cells 23 are adapted to pass through the notch 233 and be connected to the cases 231 of the two battery cells 23. In this way, the first connector 30 and/or the elastic connector 60, through direct bonding to the rigid case 231, can more effectively transmit and disperse stress, thereby enhancing a strength of a connection between the battery cells 23 and preventing loosening or failure of the connection due to deformation of the insulating film 232.

It should be noted that a shape of the notch 233 can be set as needed. For example, the notch 233 can be square, circular, or annular, which are merely examples and are not limited thereto herein. Furthermore, the number of notches 233 can be set as needed. For example, one or more notches 233 can be provided, which are merely examples and are not limited thereto herein.

It should be noted that in some embodiments of the present application, the foam glue has high fluidity when it is not solidified. By filling a gap between two adjacent battery modules 20 or between the first battery module 22 and the side wall of the housing 10 with the foam glue, the gap can be reduced as small as possible, thereby improving the energy density of the battery pack 100. In addition, the density of the foam glue after foaming is approximately 0.3 grams per cubic centimeter (g/c³), thereby improving the energy density of the battery pack 100. Of course, in some other embodiments, the density of the foam glue after foaming can be selected as needed, which is not limited thereto herein.

In a second aspect, some embodiments of the present application further propose an electrical device including a battery pack 100. A specific structure of the battery pack 100 may refer to the above embodiments. Since the electrical device may adopt all the technical solutions of all the above embodiments, the electrical device has at least all the beneficial effects brought by the technical solutions of these embodiments, which will not be repeated herein.

It should be noted that the electrical device may be a vehicle, an energy storage power supply, consumer electronics, medical equipment, or a smart city, etc. These are merely examples and are not limited thereto herein.

## Claims

1. A battery pack (100), **characterized by** comprising:
a housing (10);
a plurality of battery modules (20) arranged at intervals in the housing (10) and are all connected to a bottom of the housing (10), wherein each of the plurality of battery modules (20) has a first end face (21) facing away from the bottom of the housing (10); and
a plurality of first connectors (30), wherein a respective one of the plurality of first connectors (30)is sandwiched between two adjacent ones of the plurality of battery modules (20) and is configured to fix the two adjacent battery modules (20) as a whole, each of the plurality of first connectors (30) has a second end face (31) facing away from the bottom of the housing (10), each second end face (31) is located between a respective one of the first end faces (21) and the bottom of the housing (10), and a distance between the second end face (31) and the first end face (21) is L1, where 20 mm≤L1≤30 mm.

2. The battery pack (100) according to claim 1, **characterized in that** each first connector (30) is bonded and fixed to the two adjacent battery modules (20); and/or,
the battery pack (100) further comprises structural adhesive (40), and each battery module (20) and the bottom of the housing (10) are bonded and fixed by the structural adhesive (40).

3. The battery pack (100) according to claim 2, **characterized in that** the plurality of first connectors (30) comprise foam glue.

4. The battery pack (100) according to any one of claims 1 to 3 , **characterized in that** a distance between two adjacent ones of the plurality of battery modules (20) is L2, where 3 mm≤L2≤10 mm.

5. The battery pack (100) according to any one of claims 1 to 4, **characterized in that** the plurality of battery modules (20) comprise a plurality of first battery modules (22), and a side wall of each of the plurality of first battery modules (22) is arranged opposite to a side wall of the housing (10); and
the battery pack (100) further comprises a plurality of second connectors (50), and the side wall of each of the plurality of first battery modules (22) is bonded and fixed to the side wall of the housing (10) by a respective one of the second connectors (50).

6. The battery pack (100) according to claim 5, **characterized in that** the plurality of second connectors (50) comprise foam glue.

7. The battery pack (100) according to claim 5 or 6, **characterized in that** each of the plurality of first battery modules (22) has a third end face (221) facing away from the bottom of the housing (10);
each of the plurality of second connectors (50) has a fourth end face (51) facing away from the bottom of the housing (10), each fourth end face (51) is located between a respective one of the third end faces (221) and the bottom of the housing body (10), and a distance between the fourth end face (51) and the third end face (221) is L3, where 20 mm≤L3≤30 mm.

8. The battery pack (100) according to any one of claims 1 to 7, **characterized in that** the battery module (20) comprises a plurality of battery cells (23) arranged at intervals;
the battery pack (100) further comprises a plurality of elastic connectors (60), and a respective one of the plurality of elastic connectors (60) is sandwiched between two adjacent ones of the plurality of battery cells (23).

9. The battery pack (100) according to claim 8, **characterized in that** each elastic connector (60) is bonded and fixed to the two adjacent battery cells (23).

10. The battery pack (100) according to claim 8 or 9, **characterized in that** the plurality of elastic connectors (60) comprise foam glue.

11. The battery pack (100) according to any one of claims 8 to 10 , **characterized in that** each of the plurality of battery cells (23) comprises a case (231) and an insulating film (232) covering the case (231), the insulating film (232) comprises a film segment (2321) corresponding to a side wall of the case (231), the film segment (2321) is provided with a notch (233), and the first connector (30) and/or the elastic connector (60) between the two adjacent battery cells (23) is adapted to pass through the notch (233) to be connected to the cases (231) of the two battery cells (23).

12. An electrical device, **characterized by** comprising the battery pack (100) according to any one of claims 1 to 11.
